(19) Europäisches Patentamt
European Patent Office
Office européen des brevets

(11) Publication number: **0 147 257 B1**

(12) # EUROPEAN PATENT SPECIFICATION

(45) Date of publication of patent specification: **08.07.87**

(51) Int. Cl.$^4$: **C 09 D 11/00**, C 09 B 23/10, C 09 B 23/14

(21) Application number: **84402207.9**

(22) Date of filing: **05.11.84**

(54) **Infrared absorbing inks.**

(30) Priority: **04.11.83 US 548806**

(43) Date of publication of application: **03.07.85 Bulletin 85/27**

(45) Publication of the grant of the patent: **08.07.87 Bulletin 87/28**

(84) Designated Contracting States: **DE FR GB**

(56) References cited: **None**

(73) Proprietor: **EASTMAN KODAK COMPANY**
**343 State Street**
**Rochester New York 14650 (US)**

(72) Inventor: **Fulkerson, Brazelton**
**28 Sunrise Crescent**
**Rochester New York 14622 (US)**
Inventor: **Weidner, Charles H.**
**Eastman Kodak Company Kodak Park**
**Rochester, New York 14650 (US)**
Inventor: **Wadsworth, Donald H.**
**Eastman Kodak Company Kodak Park**
**Rochester, New York 14650 (US)**
Inventor: **Zander, Dennis R.**
**35 Rolling Meadows Way**
**Penfield New York 14526 (US)**

(74) Representative: **Parent, Yves et al**
**Kodak-Pathé Département Brevets et Licences**
**Centre de Recherches et de Technologie**
**Zone Industrielle**
**F-71102 Chalon-sur-Saone Cédex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to inks and more particularly to infrared absorbing inks suitable for use in ink jet printers.

Bar coding has become a standard means for inventory control of a variety of commodities and for ease of updating prices. Bar codes are often applied by ink jet printers. Such ink jet printers are well known. In general they comprise ink jet orifices; means for delivering an ink composition to the orifices and means for causing the ink composition to emerge from the orifices in an imagewise pattern. The bar codes are printed on a variety of substrates such as paper, cardboard, plastic, glass, glossy labels, and other kinds of commercial packaging materials. For inventories of radiation sensitive materials, such as photographic paper, it is desirable to apply bar codes that can be read with radiation that does not expose the radiation sensitive material. Nevertheless, it is desirable that such bar codes should be visible to the human eye for easy inspection of printing quality.

Inks designed for use in ink jet printers must be formulated to contain sufficient dye to provide an optically dense bar code for easy machine, human or computer reading. U.S. Patent 3,705,043 discloses infrared absorbing ink compositions containing nigrosine dyes. The problem is that these dyes cause the orifices of ink jet printers to clog.

It is an object of the present invention to provide infrared absorbing inks which do not clog the orifices of ink jet printers.

This object is achieved with an ink composition comprising a dye, a binder and a solvent blend characterized in that the composition comprises, as the dye, at least 1.0% by weight of an infrared absorbing oxoindolizinium dye. By solvent blend we mean a mixture of at least two different organic solvents.

The inks of this invention are useful in ink jet printers. The inks will not clog the orifices of the jet printer. They remain stable under conditions of high temperature and high humidity. The oxoindolizinium dyes are sufficiently soluble in the selected solvents to provide a sufficiently optically dense image to be read by current machines used to read infrared printing codes. The bar codes printed with the inks are visible to the human eye. In addition, the inks of the invention possess an electrical conductivity of between 400—1000 ohm-cm for proper deflection of ink drops by an electric field when discharged from the ink jet orifice; a viscosity of between 2—4 MPA.s to insure good runability in the orifices of ink jet printers and a surface tension between 25—40 millinewtons/meter to insure good cohesion of ink drops as they exit the jet printer orifice and good wetability of the ink on most substrates.

In a preferred embodiment, the dye of the ink composition has the structure

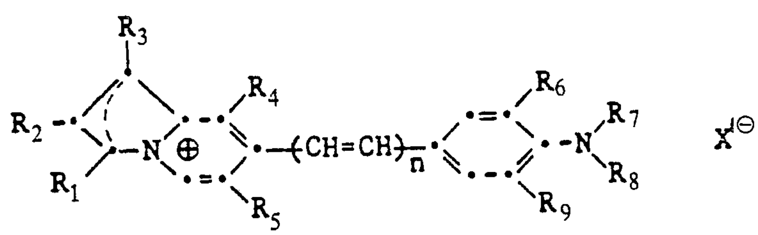

wherein

n is an integer of from 1 to 4;

$R_1$ and $R_3$ each independently represent keto, hydrogen, alkyl or aryl provided that either $R_1$ or $R_3$ must be keto;

$R_2$, $R_4$, $R_5$, $R_6$, $R_7$, $R_8$ and $R_9$, each individually represents hydrogen, alkyl, alkoxy and aryl;

or $R_6$ and $R_7$ taken together with N form a fused 6-member saturated cyclic ring; or

$R_6$, $R_7$ or $R_8$ and $R_9$ together with N and the phenylidene group to which N is bonded form a julolidinyl ring; and

X represents an anion.

Alkyl refers to straight- or branched-chain alkyl groups having 1 to 6 carbon atoms such as methyl, butyl, neopentyl, etc. Aryl may be substituted or unsubstituted and includes phenyl, mesityl, tolyl, dimethoxyphenyl, naphthyl, t-butylphenyl, methoxyphenyl, etc.

The oxoindolizinium dyes useful in forming the ink compositions of the invention and methods for making such dyes are described in detail in U.S. Patent 4,368,247. In general, the dyes are formed by reaction of a photosensitive cyclopropenone with a pyridine compound and reaction of the resulting product with a color forming coupler.

A portion of the representative dyes useful in the present invention are set out in Tables I and II. The dyes of Table I illustrate a tetrahydroquinoline infrared absorbing component connected to the oxoindolizinium nucleus through one or more methine linkages. Table II discloses compounds in which the infrared absorbing component is julolidine. While these materials are exemplified in Tables I and II, it will be obvious to one skilled in the art that any other infrared absorbing component can be attached to the oxoindolizinium nucleus through one or more methine linkages. Examples of other materials from which infrared absorbing components may be derived include cyanine compounds, pyrylium compounds, thiopyrylium compounds, benzothiazolium compounds and benzoselenazolium compounds.

## TABLE I

### Oxoindolizinium Dyes with an IR Absorbing Component

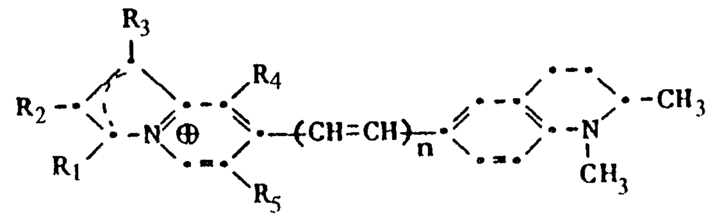

$X^{\ominus}$

| Dye | $R_1$ | $R_2$ | $R_3$ | $R_4$ | $R_5$ | $X^{\ominus}$ | n | λ-max |
|---|---|---|---|---|---|---|---|---|
| 1 | 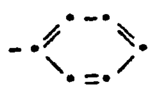 | 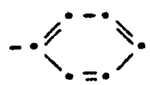 | =O | H | H | $CF_3SO_3^{\ominus}$ | 1 | 820 nm |
| 2 | 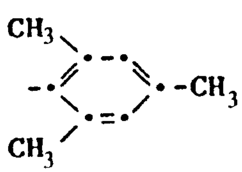 | 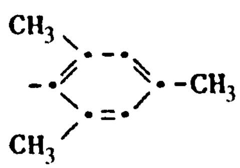 | =O | H | H | $CF_3SO_3^{\ominus}$ | 1 | 815 nm |
| 3 | 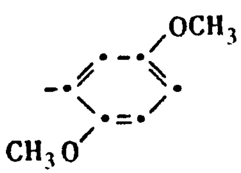 | 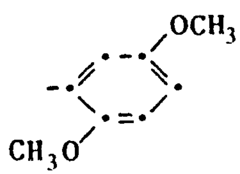 | =O | H | H | $CF_3SO_3^{\ominus}$ | 1 | 800 nm |

## TABLE I cont'd.

| Dye | $R_1$ | $R_2$ | $R_3$ | $R_4$ | $R_5$ | $X^{\ominus}$ | n | λ-max |
|---|---|---|---|---|---|---|---|---|
| 4 | 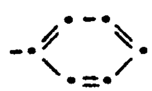 | 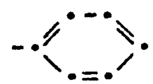 | =O | mixtures of H / $CH_3$ | $CH_3$ / H | $CF_3SO_3^{\ominus}$ | 1 | 800 nm |
| 5 | 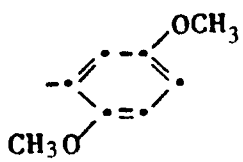 | 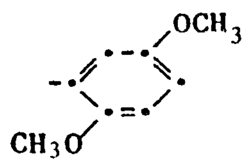 | =O | mixtures of H / $CH_3$ | $CH_3$ / H | $CF_3SO_3^{\ominus}$ | 1 | 800 nm |
| 6 | 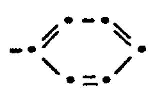 | 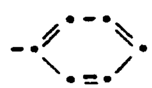 | =O | $CH_3$ | $CH_3$ | $CF_3SO_3^{\ominus}$ | 1 | 820 nm |
| 7 | 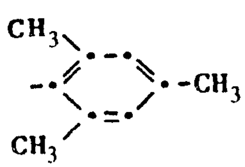 | 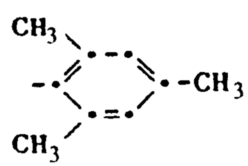 | =O | $CH_3$ | $CH_3$ | $CF_3SO_3^{\ominus}$ | 1 | 820 nm |
| 8 | 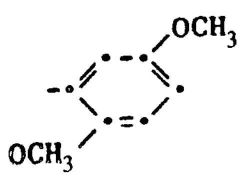 | 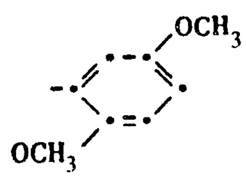 | =O | $CH_3$ | $CH_3$ | $CF_3SO_3^{\ominus}$ | 1 | 800 nm |

TABLE I cont'd.

| Dye | R1 | R2 | R3 | R4 | R5 | $X^{\ominus}$ | n | λ-max |
|---|---|---|---|---|---|---|---|---|
| 9 | 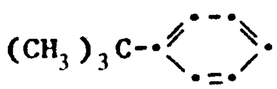 | 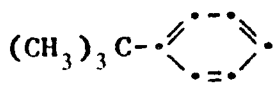 | =O | H | H | $BF_4^{\ominus}$ | 1 | 820 |
| 10 | 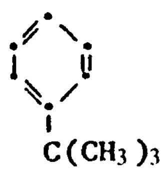 | 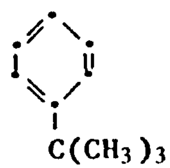 | =O | H | H | $CF_3SO_3^{\ominus}$ | 2 | |

**TABLE II**

**Oxoindolizinium Dyes with a Julolidine IR Absorbing Component**

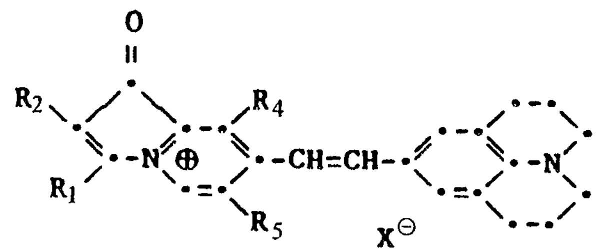

| Dye | $R_1$ | $R_2$ | $R_4$ | $R_5$ | $X^{\ominus a}$ | λ-max |
|---|---|---|---|---|---|---|
| 11 | 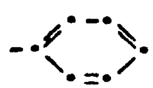 | 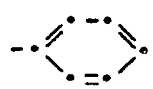 | H | H | $CF_3SO_3^{\ominus}$ | 845 nm |
| 12 | 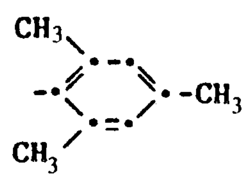 | 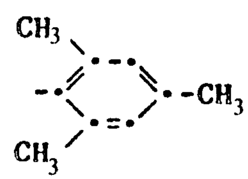 | H | H | $CF_3SO_3^{\ominus}$ | 840 nm |
| 13 | 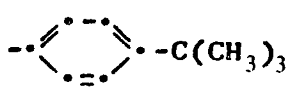 | 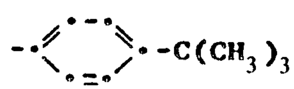 | H | H | $CF_3SO_3^{\ominus}$ | 840 nm |

TABLE II cont'd

| Dye | $R_1$ | $R_2$ | $R_4$ | $R_5$ | $X^{\ominus}$ | λ-max |
|---|---|---|---|---|---|---|
| 14 | 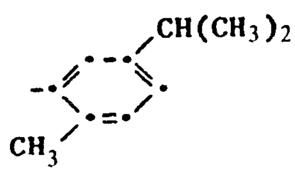 | 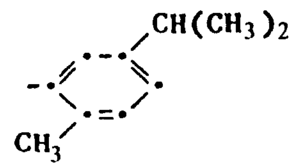 | H | H | $CF_3SO_3^{\ominus}$ | 840 nm |
| 15 | 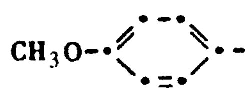 | 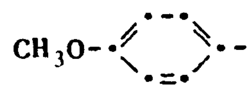 | H | H | $BF_4^{\ominus}$ | 840 |

Another useful oxoindolizinium dye is:

| Dye | Structure | $X^{\ominus}$ | λ-max |
|---|---|---|---|
| 16 | 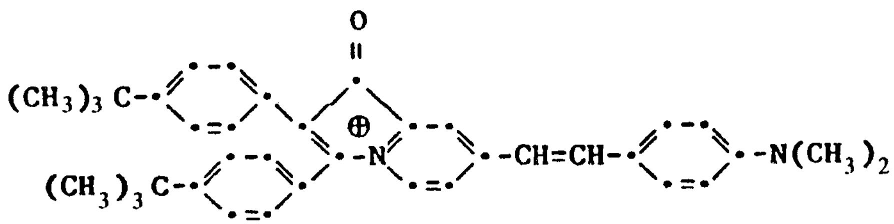 | $BF_4^{\ominus}$ | 780 |
| 17 | 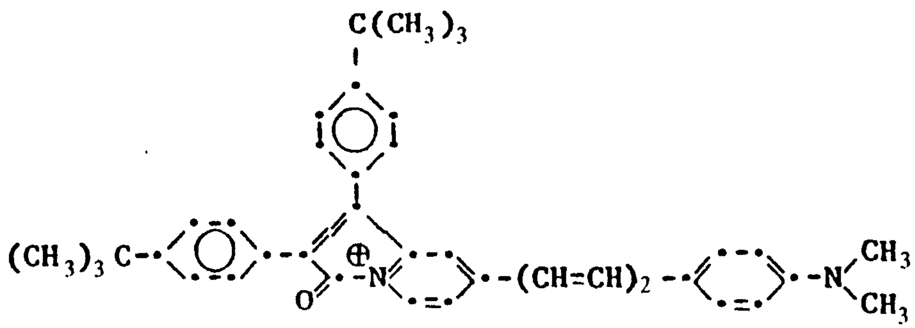 | $CF_3SO_3^{\ominus}$ | 845 |

The inks of this invention are prepared by first combining the selected organic liquids to form a solvent blend. The selected binder is stirred into the solvent blend until a clear solution is obtained. The dye is stirred into the latter solution until the dye is completely dissolved. The resulting ink is then centrifuged and/or filtered to remove any suspended or particulate matter.

The inks of this invention are formulated to provide compositions having at least 1% by weight of dye, preferably at least 3% by weight of dye. This amount of dye is necessary to provide a sufficient optically dense image to be read by current machines used to read infrared print codes. This amount of dye usually provides sufficient resistivity (400—600 ohm-cm) to provide a uniform stream in ink jet printers.

The ink composition comprises up to about 5 weight percent of binder. The binder is necessary to provide ink drops with cohesion especially upon initial contact with the substrate upon which printing occurs. The binder also aids adhesion of the dye to the substrate as well as controlling the viscosity of the final ink composition. Thus, the binder must be chosen so that it is soluble in the selected solvent blend. Useful binders include cellulose esters such as cellulose acetate propionate, cellulose acetate, cellulose acetate butyrate and cellulose acetate succinate. Poly(vinylacetate) and poly(vinylbutyrol) are also useful. Other useful polymers are disclosed in the ink arts such as in U.S. Patent 4,070,322.

Useful solvent blends must be capable of dissolving the selected dye and binder as well as other addenda needed to adjust the conductivity, surface tension and viscosity of the ink compositions of the present invention. The solvent blend is also designed to prevent drying out of the ink in jet printer orifices and at the same time facilitate rapid drying of the ink after printing.

In general, useful solvent blends will comprise a mixture of organic liquids to accomplish these diverse ends. In general, the ink composition will comprise a) from 2 to 10 weight percent of high boiling organic liquid (boiling point of at least 150°C) such as 4-butyrolactone, n-methylpyrrolidone and cyclic ketones such as cyclohexanone; or chlorinated hydrocarbons such as tetrachloroethylene; b) from 30 to 80 weight percent of low boiling organic liquid (boiling point less than 100°C) such as acetone, ethyl alcohol, methyl alcohol, isopropyl alcohol, ethyl acetate, methyl ethyl ketone or methylene chloride; and if necessary, c) from 15 to 59 weight percent of an intermediate boiling organic liquid, such as 2-methoxyethanol, 2-methoxyethylacetate, cyclopentanol or 1-methyl-2-chloropropanol. The intermediate boiling organic liquids are useful in optimizing the solvent blend between the properties of the high boiling organic liquid and the low boiling organic liquid. Of course, each organic liquid component of the mixture must be miscible with the other organic liquid components. The solvent blend comprises from about 80 to 97 weight percent of the total ink composition.

Useful solvent blends must be capable of dissolving the selected dye and binder as well as other addenda needed to adjust the conductivity, surface tension and viscosity of the ink compositions of the present invention. The solvent blend is also designed to prevent drying out of the ink in jet printer orifices and at the same time facilitate rapid drying of the ink after printing.

In general, useful solvent blends will comprise a mixture of organic liquids to accomplish these diverse ends. In general, the ink composition will comprise a) from 2 to 10 weight percent of high boiling organic liquid (boiling point of at least 150°C) such as 4-butyrolactone, n-methylpyrrolidone and cyclic ketones such as cyclohexanone; or chlorinated hydrocarbons such as tetrachloroethylene; b) from 30 to 80 weight percent of low boiling organic liquid (boiling point less than 100°C) such as acetone, ethyl alcohol, methyl alcohol, isopropyl alcohol, ethyl acetate, methyl ethyl ketone or methylene chloride; and if necessary, c) from 15 to 50 weight percent of an intermediate boiling organic liquid, such as 2-methoxyethanol, 2-methoxyethylacetate, cyclopentanol or 1-methyl-2-chloropropanol. The intermediate boiling organic liquids are useful in optimizing the solvent blend between the properties of the high boiling organic liquid and the low boiling organic liquid. Of course, each organic liquid component of the mixture must be miscible with the other organic liquid components. The solvent blend comprises from about 80 to 97 weight percent of the total ink composition.

In general, inks prepared with the proportions of dye, binder and organic liquids described above will possess the required resistivity (400—1000 ohm-cm) surface tension (25—40 millinewtons/meter) and viscosity (2—4 MPa.s). As such they will work well in ink jet printers. However, if necessary, other addenda known in the ink making art may be added to the ink composition to adjust the resistivity and surface tension.

The surface tension can be adjusted, when required with an anionic surfactant such as sodium alkyl sulfite, a cationic surfactant such as an alkylpyridinium sulfite salt or a nonionic surfactant such as polyoxyethylene alkyl ether. The choice of the particular material for adjusting the surface tension will be influenced by the solvent blend selected and solubility factors.

The required resistivity of the ink compositions is usually provided by the selected oxoindolizinium dye. The resistivity can also be adjusted with relatively small amounts of water or an ionizable salt dissolved in water. Useful ionizable salts include dimethylamine hydrochloride, sodium propionate, sodium acetate and the like. The resistivity should generally be maintained in the range of about 400—1000 ohm-cm. Of course, any of the latter resistivity modifiers must be soluble or miscible in the ink solvent mixture.

The following examples are presented to illustrate the preparation and use of a variety of ink compositions included within the scope of this invention.

Examples 1—4

In these examples ink compositions were prepared using a mixed solvent blend. All of the selected organic liquids were mixed together to form the solvent mixture. The binder, cellulose acetate propionate, was dissolved in the solvent mixture by stirring for about two hours until a clear solution was obtained. The selected Table I or Table II dye was then added to the solvent and stirred until the dye was completely dissolved. To remove any existing undissolved dye or polymer, the ink was centrifuged at 50,000 rpm using a 4 mm orifice and a 19 cm gum rubber hose inlet. After centrifuging, the material was filtered through a 1.5 micrometer filter.

Water is used in Examples 1 and 2 to adjust the electrical resistance of the final ink composition. The prepared inks had the following compositions.

Example 1

| | Weight Percent |
|---|---|
| Cellulose Acetate Propionate (binder) | 3.1 |
| 4-Butyrolactone | 4.7 |
| 2-Methoxyethanol | 23.4 |
| Methyl Ethyl Ketone | 57.6 |
| Dye No. 4, Table I | 4.7 |
| Distilled Water | 6.5 |

Example 2

| | Weight Percent |
|---|---|
| Cellulose Acetate Propionate | 3.0 |
| 4-Butyrolactone | 7.5 |
| 1-Methoxy-2-propanol | 41.0 |
| Dye No. 6, Table I | 2.5 |
| Methyl Ethyl Ketone | 40.0 |
| Distilled Water | 6.0 |

| | Weight Percent |
|---|---|
| Cellulose Acetate Propionate | 3.0 |
| 4-Butyrolactone | 5.0 |
| 2-Methoxyethanol | 18.0 |
| Dye No. 11, Table II | 3.0 |
| Methanol | 71.0 |

Example 4

| | Weight Percent |
|---|---|
| Cellulose Acetate Propionate | 3.3 |
| 4-Butyrolactone | 5.0 |
| 2-Methoxyethanol | 25.0 |
| Dye No. 1, Table I | 5.0 |
| Methyl Ethyl Ketone | 61.7 |

Analysis of the above inks show:

| | |
|---|---|
| Electrical resistivity | 700—800 ohm-cm |
| Surface Tension | 25—27 millinewton/meter |
| Viscosity | 2—3 MPa.s |
| Density | 830—900 Kg/m$^3$ |
| % Solids | 8.4—8.8 |

Each of the above ink compositions was evaluated in an A. B. Dick Model 9100 ink jet printer, modified for applying bar codes. Using the latter printer, a series of bar codes were printed on white paper stock and photographic color paper. The ink performed well in the printer. No clogging of the ink jet orifice was noted. The ink emerged from the jet orifices in a uniform steady stream. The bar codes printed with the above inks were read out with a Skan-O-Matic IR bar code reader having a solid state diode laser. The bar codes printed on Ekta-color paper range from 0.25 to 0.50 mm in width. The bar codes showed sufficient optical density in subdued visible light to determine their presence visually. The bar codes also possessed sufficient density in the infrared to enable bar code reading using the Skan-O-Matic IR bar code reader.

As many as one million dots can be printed in the A. B. Dick ink jet printer with 1 cc of each of the exemplified inks.

Examples 5—10

Dyes 3, 7, 9 and 8 of Table I and Dyes 15 and 17 of Table II were each formulated into ink compositions using the same solvents, binders and weight percentages of Example 1. The dyes were all found to be soluble in the solvent system of Example 1.

**Claims**

1. An ink composition comprising a dye, a binder and a solvent blend characterized in that the composition comprises as the dye at least 1.0% by weight of an infrared absorbing oxoindolizinium compound.

2. The ink composition of claim 1 wherein the dye has the structure

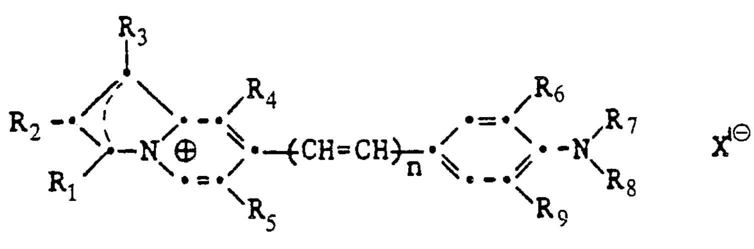

wherein

n is an integer of from 1 to 4;

$R_1$ and $R_3$ each independently represent keto, hydrogen, substituted or unsubstituted alkyl or substituted or unsubstituted aryl provided that either $R_1$ or $R_3$ must be keto;

$R_2$, $R_4$, $R_5$, $R_6$, $R_7$, $R_8$ and $R_9$, each individually represents hydrogen, substituted or unsubstituted alkyl, substituted or unsubstituted alkoxy and substituted or unsubstituted aryl; or

$R_6$ and $R_7$ taken together with N form a fused 6-member saturated cyclic ring; or

$R_6$, $R_7$ or $R_8$ and $R_9$ together with N and the phenylidene group to which N is bonded form a julolidinyl ring; and

X represents an anion.

3. The composition of claim 2 wherein $R_1$ and $R_2$ each independently represent hydrogen, methyl, phenyl, t-butylphenyl, trimethylphenyl, methylphenyl or dimethoxyphenyl;

$R_3$ represents a keto group;

$R_4$ and $R_5$ each independently represent hydrogen or methyl;

$R_6$ and $R_7$ taken together with N form a fused 6-member cyclic ring; or

$R_6$, $R_7$ or $R_8$ and $R_9$ together with N and the phenylidene ring to which N is bonded form a julolidinyl ring;

X represents $CF_3SO_3^{\ominus}$ or $BF_4^{\ominus}$.

4. The composition of claim 2 wherein $R_1$ represents a keto group and $R_3$ and $R_2$ represent t-butylphenyl.

5. The ink composition of claim 2 wherein the dye is selected from Tables I and II as follows:

TABLE I

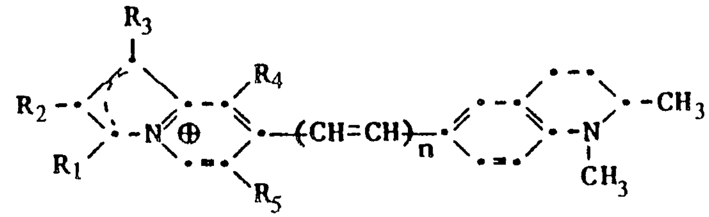 $X^{\ominus}$

| Dye | R1 | R2 | R3 | R4 | R5 | $X^{\ominus}$ | n |
|---|---|---|---|---|---|---|---|
| 1 | 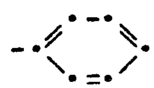 | 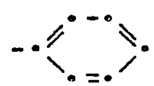 | =O | H | H | $CF_3SO_3^{\ominus}$ | 1 |
| 2 | 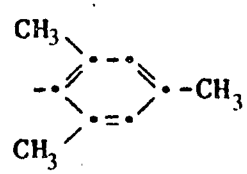 | 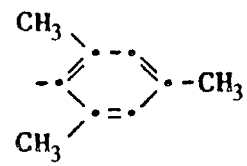 | =O | H | H | $CF_3SO_3^{\ominus}$ | 1 |
| 3 | 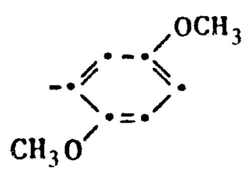 | 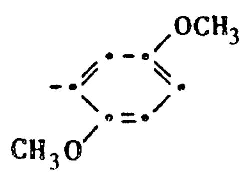 | =O | H | H | $CF_3SO_3^{\ominus}$ | 1 |

TABLE I cont'd.

| Dye | $R_1$ | $R_2$ | $R_3$ | $R_4$ | $R_5$ | $X^{\ominus}$ | n |
|---|---|---|---|---|---|---|---|
| 4 | 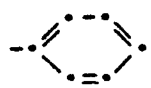 | 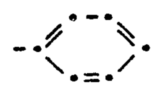 | =O | mixtures of<br>H<br>$CH_3$ | <br>$CH_3$<br>H | $CF_3SO_3^{\ominus}$ | 1 |
| 5 | 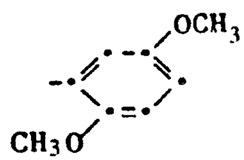 | 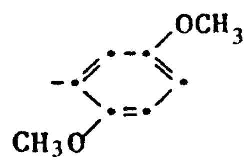 | =O | mixtures of<br>H<br>$CH_3$ | <br>$CH_3$<br>H | $CF_3SO_3^{\ominus}$ | 1 |
| 6 | 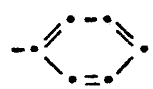 | 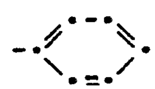 | =O | $CH_3$ | $CH_3$ | $CF_3SO_3^{\ominus}$ | 1 |
| 7 | 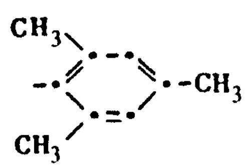 | 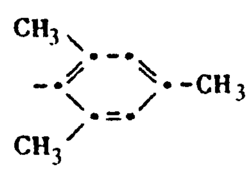 | =O | $CH_3$ | $CH_3$ | $CF_3SO_3^{\ominus}$ | 1 |
| 8 | 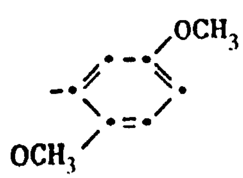 | 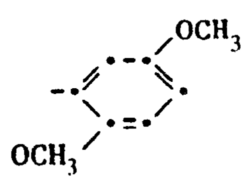 | =O | $CH_3$ | $CH_3$ | $CF_3SO_3^{\ominus}$ | 1 |

TABLE I cont'd.

| Dye | $R_1$ | $R_2$ | $R_3$ | $R_4$ | $R_5$ | $X^{\ominus}$ | n |
|---|---|---|---|---|---|---|---|
| 9 | 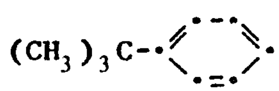 | 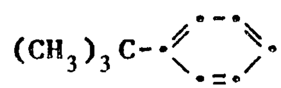 | =O | H | H | $BF_4^{\ominus}$ | 1 |
| 10 | 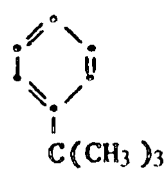 | 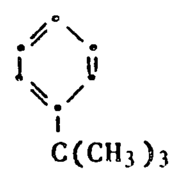 | =O | H | H | $CF_3SO_3^{\ominus}$ | 2 |

## TABLE II

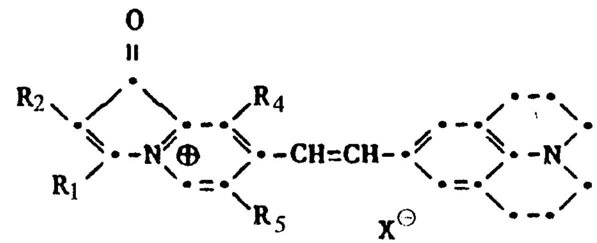

| Dye | $R_1$ | $R_2$ | $R_4$ | $R_5$ | $X^{\ominus}$ |
|---|---|---|---|---|---|
| 11 | 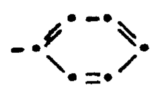 | 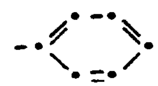 | H | H | $CF_3SO_3^-$ |
| 12 | 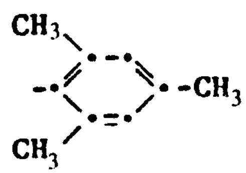 | 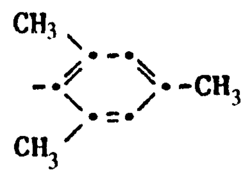 | H | H | $CF_3SO_3^{\ominus}$ |
| 13 | 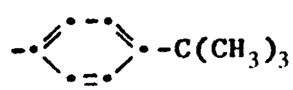 | 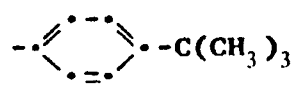 | H | H | $CF_3SO_3^{\ominus}$ |

TABLE II cont'd

| Dye | $R_1$ | $R_2$ | $R_4$ | $R_5$ | $X^{\ominus}$ |
|---|---|---|---|---|---|
| 14 | 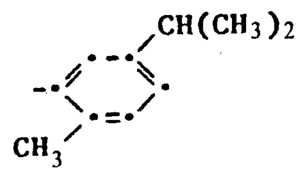 | 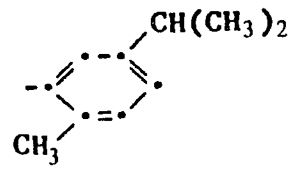 | H | H | $CF_3SO_3^{\ominus}$ |
| 15 | 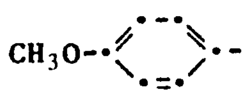 | 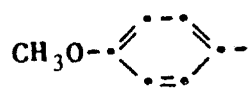 | H | H | $BF_4^{\ominus}$ |

Another useful oxoindolizinium dye is:

16 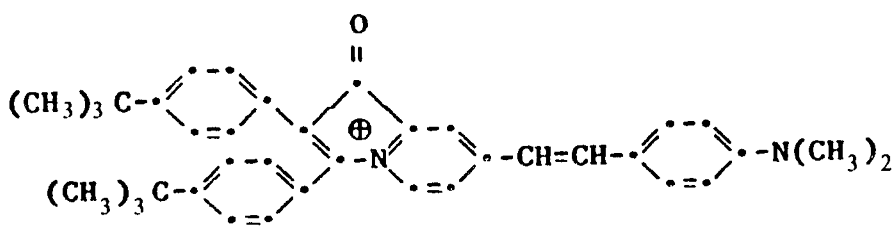 $BF_4^{\ominus}$

17 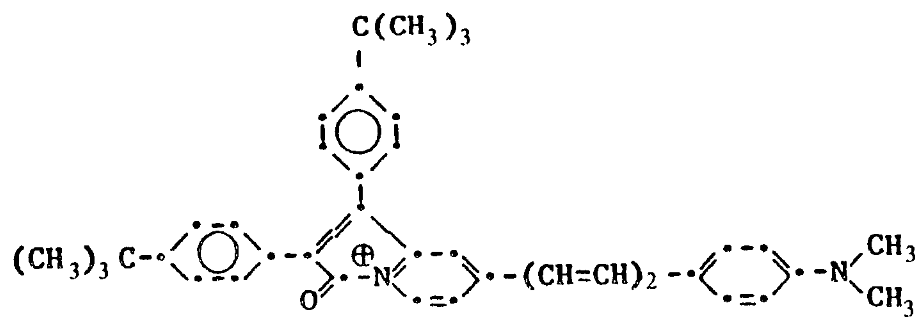 $CF_3SO_3^{\ominus}$

6. The ink composition of claim 2 wherein the dye concentration is at least 3% by weight.

**Patentansprüche**

1. Druckfarbe mit einem Farbstoff, einem Bindemittel und einem Lösungsmittelgemisch, dadurch gekennzeichnet, daß die Druckfarbe mindestens 1 Gew.-% einer infrarotabsorbierenden Oxoindolizinium-Verbindung enthält.

2. Druckfarbe nach Anspruch 1, dadurch gekennzeichnet, daß der Farbstoff der folgenden Formel entspricht:

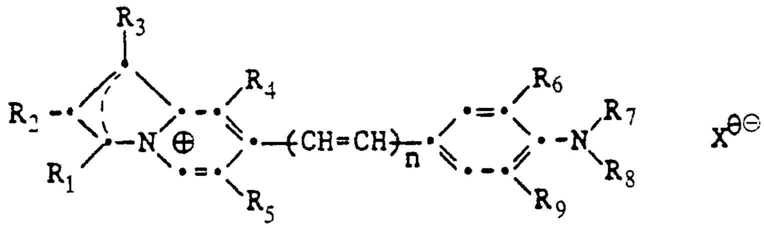

in der bedeuten:

n eine ganze Zahl von 1 bis 4;

$R_1$ und $R_3$ jeweils unabhängig voneinander eine Ketogruppe, ein Wasserstoffatom, eine substituierte oder unsubstituierte Alkylgruppe oder eine substituierte oder unsubstituierte Arylgruppe, wobei gilt, daß entweder $R_1$ oder $R_3$ Ketogruppe ist;

$R_2$, $R_4$, $R_5$, $R_6$, $R_7$, $R_8$ und $R_9$ jeweils unabhängig voneinander ein Wasserstoffatom, eine substituierte oder unsubstituierte Alkylgruppe, eine substituierte oder unsubstitueirte Alkoxygruppe oder eine substituierte oder unsubstituierte Arylgruppe oder

$R_6$ und $R_7$ gemeinsam mit N einen ankondensierten 6-gliedrigen gesättigten cyclischen Ring oder

$R_6$, $R_7$ oder $R_8$ und $R_9$ gemeinsam mit N und der Phenylidengruppe, an die N gebunden ist, einen Julolidinylring und

X ein Anion.

3. Druckfarbe nach Anspruch 2, dadurch gekennzeichnet, daß bedeuten:

$R_1$ und $R_2$ jeweils unabhängig voneinander ein Wasserstoffatom, eine Methyl-, Phenyl-, t-Butylphenyl-, Trimethylphenyl-, Methylphenyl- oder Dimethoxyphenylgruppe;

$R_3$ eine Ketogruppe;

$R_4$ und $R_5$ jeweils unabhängig voneinander ein Wasserstoffatom oder eine Methylgruppe;

$R_6$ und $R_7$ gemeinsam mit N einen ankondensierten 6-gliedrigen cyclischen Ring oder

$R_6$, $R_7$ oder $R_8$ und $R_9$ gemeinsam mit N und dem Phenylidenring, an den N gebunden ist, einen Julolidinylring und

X ein $CF_3SO_3^{\ominus}$- oder $BF_4^{\ominus}$-Anion.

4. Druckfarbe nach Anspruch 2, dadurch gekennzeichnet, daß $R_1$ für eine Ketogruppe steht und $R_3$ und $R_2$ für eine t-Butylphenylgruppe.

5. Druckfarbe nach Anspruch 2, dadurch gekennzeichnet, daß der Farbstoff aus den Tabellen I und II wie folgt ausgewählt ist:

TABELLE I

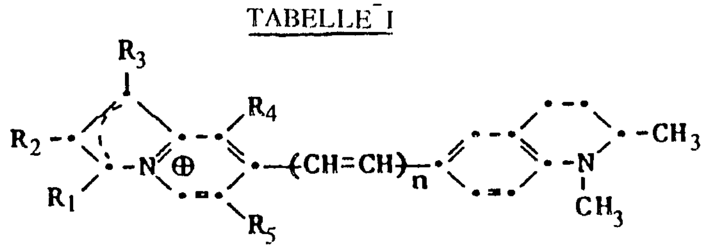

$X^{\ominus}$

| Farbstoff | R1 | R2 | R3 | R4 | R5 | $X^{\ominus}$ | n |
|---|---|---|---|---|---|---|---|
| 1 | 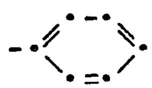 | 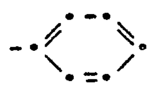 | =O | H | H | $CF_3SO_3^{\ominus}$ | 1 |
| 2 | 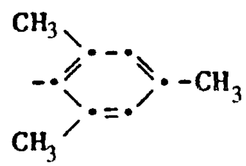 | 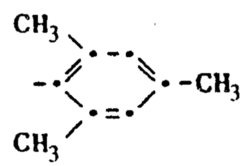 | =O | H | H | $CF_3SO_3^{\ominus}$ | 1 |
| 3 | 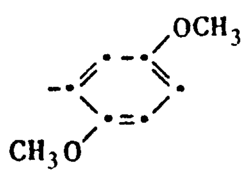 | 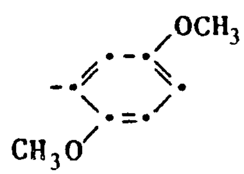 | =O | H | H | $CF_3SO_3^{\ominus}$ | 1 |

TABELLE I Forts.

| Farbstoff | $R_1$ | $R_2$ | $R_3$ | $R_4$ | $R_5$ | $X^{\ominus}$ | n |
|---|---|---|---|---|---|---|---|
| 4 | 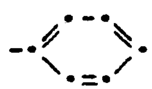 | 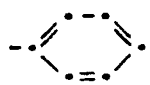 | =O | Mischungen von<br>H<br>$CH_3$ | <br>$CH_3$<br>H | $CF_3SO_3^{\ominus}$ | 1 |
| 5 | 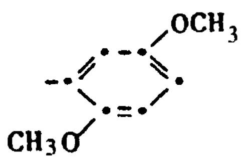 | 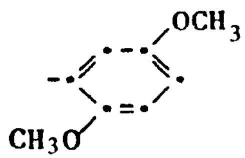 | =O | Mischungen von<br>H<br>$CH_3$ | <br>$CH_3$<br>H | $CF_3SO_3^{\ominus}$ | 1 |
| 6 | 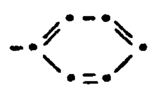 | 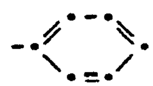 | =O | $CH_3$ | $CH_3$ | $CF_3SO_3^{\ominus}$ | 1 |
| 7 | 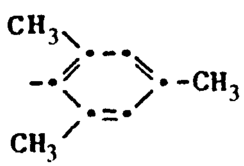 | 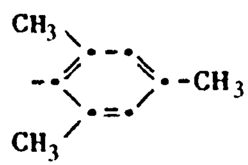 | =O | $CH_3$ | $CH_3$ | $CF_3SO_3^{\ominus}$ | 1 |
| 8 | 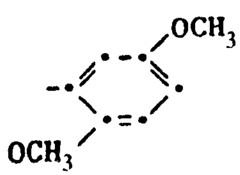 | 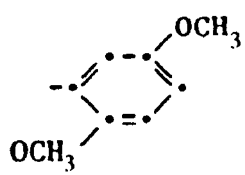 | =O | $CH_3$ | $CH_3$ | $CF_3SO_3^{\ominus}$ | 1 |

TABELLE I Forts.

| Farbstoff | $R_1$ | $R_2$ | $R_3$ | $R_4$ | $R_5$ | $X^{\ominus}$ | n |
|---|---|---|---|---|---|---|---|
| 9 | 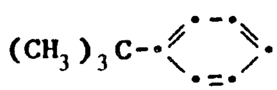 | 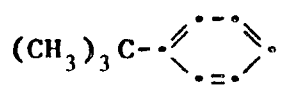 | =O | H | H | $BF_4^{\ominus}$ | 1 |
| 10 | 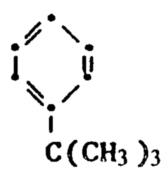 | 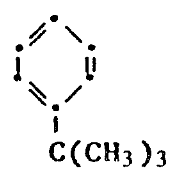 | =O | H | H | $CF_3SO_3^{\ominus}$ | 2 |

TABELLE II

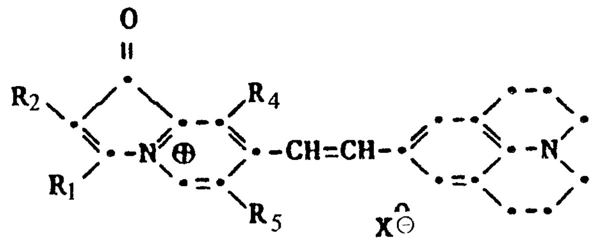

| Farbstoff | $R_1$ | $R_2$ | $R_4$ | $R_5$ | $X^{\ominus}$ |
|---|---|---|---|---|---|
| 11 | 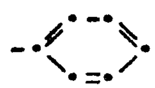 | 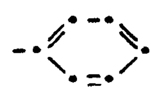 | H | H | $CF_3SO_3^{\ominus}$ |
| 12 | 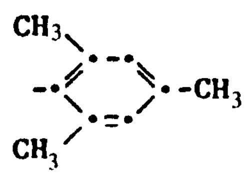 | 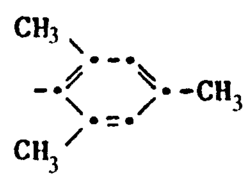 | H | H | $CF_3SO_3^{\ominus}$ |
| 13 | 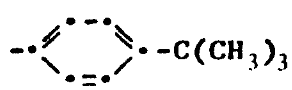 | 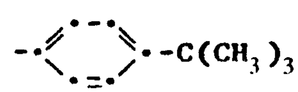 | H | H | $CF_3SO_3^{\ominus}$ |

TABELLE II Forts.

| Farbstoff | $R_1$ | $R_2$ | $R_4$ | $R_5$ | $X^{\ominus}$ |
|---|---|---|---|---|---|
| 14 | 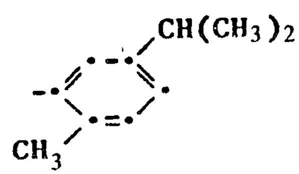 | 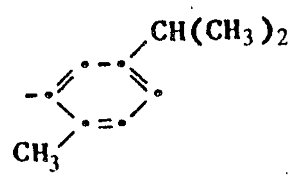 | H | H | $CF_3SO_3^{\ominus}$ |
| 15 | 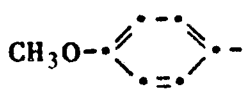 | 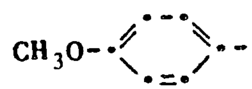 | H | H | $BF_4^{\ominus}$ |

oder einem der folgenden anderen Oxoindoliziniumfarbstoffe:

16 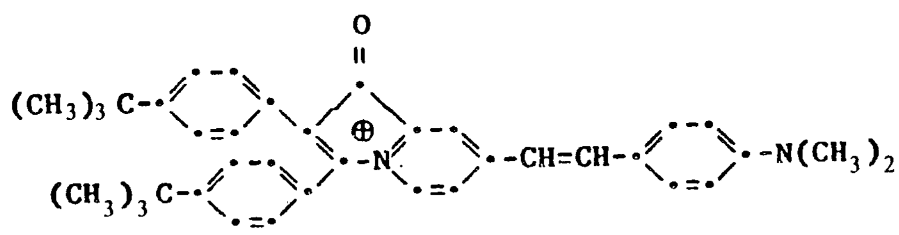 $BF_4^{\ominus}$

17 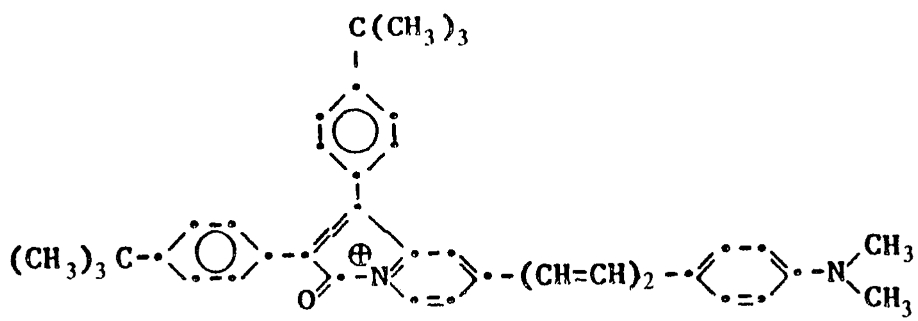 $CF_3SO_3^{\ominus}$

6. Druckfarbe nach Anspruch 2, dadurch gekennzeichnet, daß die Farbstoffkonzentration mindestens 3 Gew.-% beträgt.

**Revendications**

1. Une composition d'encre comprenant un colorant, un liant et un mélange de solvants caractérisée en ce que la composition comprend, comme colorant, au moins 1,0% en poids d'un composé oxoindolizinium absorbant dans l'infrarouge.

2. La composition d'encre de la revendication 1 dans laquelle le colorant a la structure:

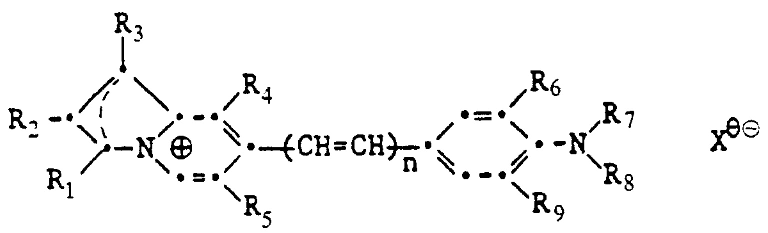

dans laquelle

n est un entier compris entre 1 et 4;

$R_1$ et $R_3$, chacun séparément, représentent un groupe céto, un atome d'hydrogène, un groupe alkyl substitué ou non-substitué, un groupe aryle substitué ou non-substitué, à condition que $R_1$ ou $R_3$ soit un groupe céto;

$R_2$, $R_4$, $R_5$, $R_6$, $R_7$, $R_8$ et $R_9$, chacun séparément, représentent un atome d'hydrogène, un groupe alkyle substitué ou non-substitué, un groupe alkoxy substitué ou non-substitué et un groupe aryle substitué ou non-substitué; ou

$R_6$ et $R_7$ ensemble forment avec N un cycle condensé saturé de 6 chaînons; ou

$R_6$, $R_7$ ou $R_8$ et $R_9$ ensemble forment avec N et le groupe phénylidène auquel N est attaché, un cycle julolidinyle; et

X représente un anion.

3. La composition de la revendication 2 dans laquelle $R_1$ et $R_2$, chacun séparément, représentent un atome d'hydrogène, un groupe méthyle, phényle, t-butylphényle, triméthylphényle, méthylphényle ou diméthoxyphényle;

$R_3$ représente un groupe céto;

$R_4$ et $R_5$ chacun séparément, représentent un atome d'hydrogène ou un groupe méthyle;

$R_6$ et $R_7$ ensemble forment avec N un cycle condensé à 6 chaînons; ou

$R_6$, $R_7$ ou $R_8$ et $R_9$ ensemble forment avec N et le groupe phénylidène auquel N est attaché un cycle julolidinyle;

X représente $CF_3SO_3^{\ominus}$ ou $BF_4^{\ominus}$.

4. La composition de la revendication 2 dans laquelle $R_1$ représente un groupe céto et $R_3$ et $R_2$ représentent le groupe t-butylphényle.

5. La composition d'encre de la revendication 2 dans laquelle le colorant est choisi dans les Tableaux I et II suivants:

TABLEAU I

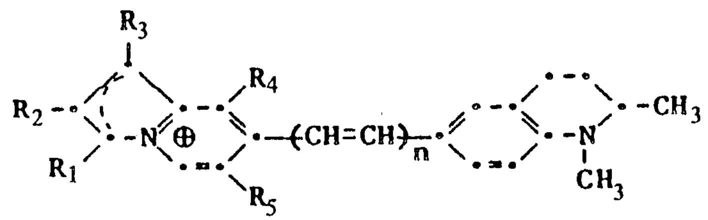

$X^{\ominus}$

| Colorant | $R_1$ | $R_2$ | $R_3$ | $R_4$ | $R_5$ | $X^{\ominus}$ | n |
|---|---|---|---|---|---|---|---|
| 1 | 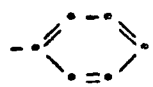 | 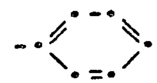 | =O | H | H | $CF_3SO_3^{\ominus}$ | 1 |
| 2 | 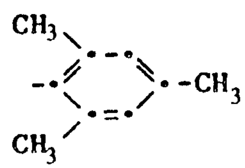 | 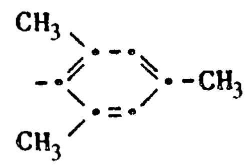 | =O | H | H | $CF_3SO_3^{\ominus}$ | 1 |
| 3 | 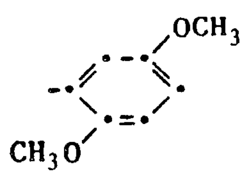 | 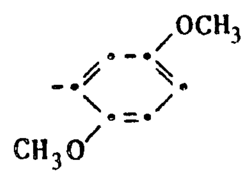 | =O | H | H | $CF_3SO_3^{\ominus}$ | 1 |

TABLEAU I suite

| Colorant | $R_1$ | $R_2$ | $R_3$ | $R_4$ | $R_5$ | $X^{\ominus}$ | n |
|---|---|---|---|---|---|---|---|
| 4 | 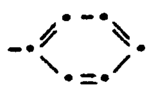 | 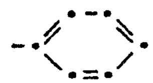 | =O | mélanges der<br>H<br>$CH_3$ | <br>$CH_3$<br>H | $CF_3SO_3^-$ | 1 |
| 5 | 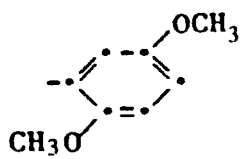 | 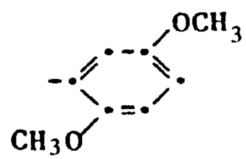 | =O | mélanges de<br>H<br>$CH_3$ | <br>$CH_3$<br>H | $CF_3SO_3^{\ominus}$ | 1 |
| 6 | 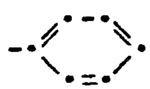 | 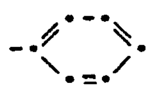 | =O | $CH_3$ | $CH_3$ | $CF_3SO_3^{\ominus}$ | 1 |
| 7 | 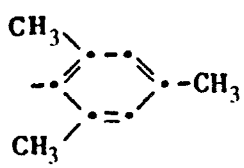 | 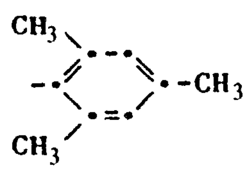 | =O | $CH_3$ | $CH_3$ | $CF_3SO_3^{\ominus}$ | 1 |
| 8 | 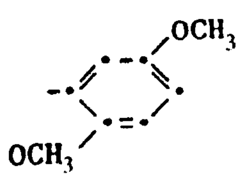 | 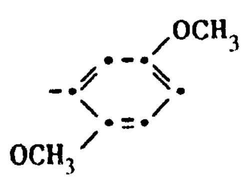 | =O | $CH_3$ | $CH_3$ | $CF_3SO_3^{\ominus}$ | 1 |

TABLEAU I suite

| Colorant | $R_1$ | $R_2$ | $R_3$ | $R_4$ | $R_5$ | $X^{\ominus}$ | n |
|---|---|---|---|---|---|---|---|
| 9 | 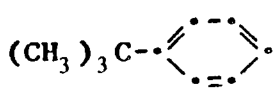 | 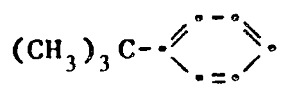 | =O | H | H | $BF_4^{\ominus}$ | 1 |
| 10 | 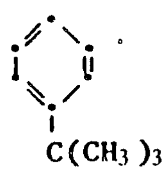 | 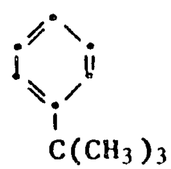 | =O | H | H | $CF_3SO_3^{\ominus}$ | 2 |

TABLEAU II

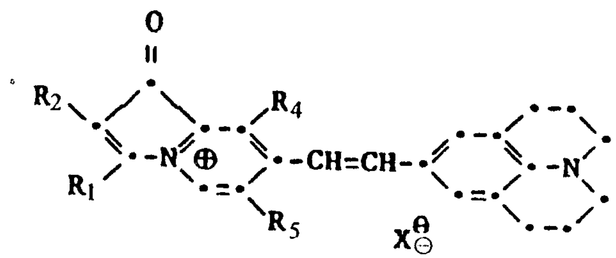

| Colorant | R1 | R2 | R4 | R5 | X⊖ |
|---|---|---|---|---|---|
| 11 | 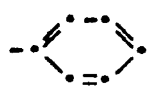 | 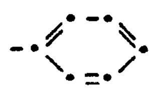 | H | H | $CF_3SO_3^{\ominus}$ |
| 12 | 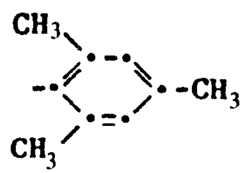 | 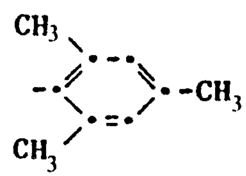 | H | H | $CF_3SO_3^{\ominus}$ |
| 13 | 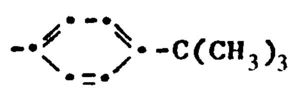 | 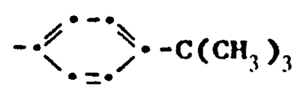 | H | H | $CF_3SO_3^{\ominus}$ |

TABLEAU II suite

| Colorants | $\underline{R}_1$ | $\underline{R}_2$ | $\underline{R}_4$ | $\underline{R}_5$ | $\underline{X^{\ominus}}$ |
|---|---|---|---|---|---|
| 14 | 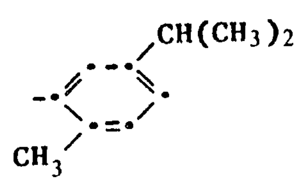 | 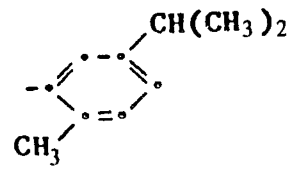 | H | H | $CF_3SO_3^{\ominus}$ |
| 15 | 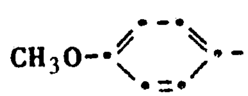 | 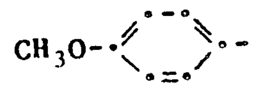 | H | H | $BF_4^{\ominus}$ |

Autres colorants oxoindolizinium utiles

16 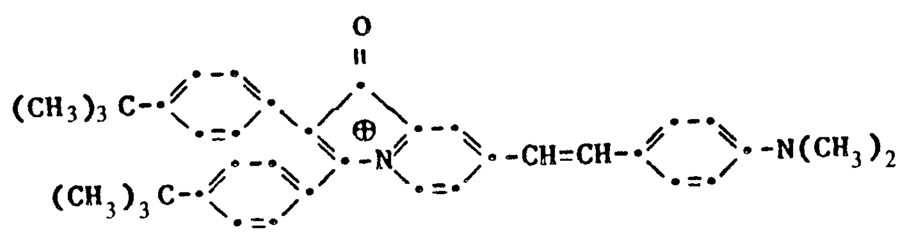 $BF_4^{\ominus}$

17 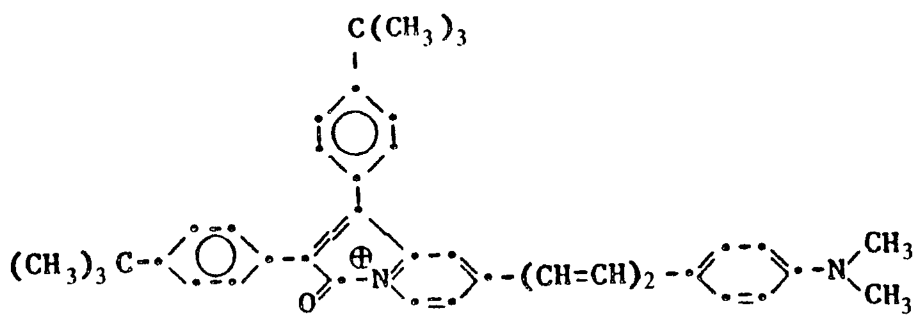 $CF_3SO_3^{\ominus}$

6. La composition d'encre de la revendication 2 dans laquelle la concentration de colorant est au moins de 3% en poids.